# FASCICULE DE BREVET EUROPEEN

(11) **EP 2 705 723 B1**
(45) Date de publication et mention de la délivrance du brevet: **09.08.2017**
(21) Numéro de dépôt: 12718260.8
(22) Date de dépôt: 07.05.2012
(51) Int. Cl.: H04W 76/02

(54) **PROCEDE D'ETABLISSEMENT D'UNE PREMIERE ET D'UNE DEUXIEME ASSOCIATION DECOUPLEES**
VERFAHREN ZUR HERSTELLUNG EINER ERSTEN UND EINER ZWEITEN VONEINANDER ENTKOPPELTEN ASSOZIATION
METHOD OF ESTABLISHING A FIRST AND A SECOND ASSOCIATION WHICH ARE DECOUPLED

(30) Priorité: 06.05.2011 EP 11305543
(43) Date de publication de la demande: 12.03.2014
(73) Titulaire: Thomson Licensing, 92130 Issy-les-Moulineaux (FR)
(72) Inventeur: FONTAINE, Patrick, F-35576 Cesson-Sevigne (FR); PIAMRAT, Kandaraj, F-35576 Cesson-Sevigne (FR); DORE, Renaud, F-35576 Cesson-Sevigne (FR)
(74) Mandataire: Rolland, Sophie
(86) Numéro de dépôt international: PCT/EP2012/058326
(87) Numéro de publication internationale: WO 2012/152733

(56) Documents cités:
- US-A1- 2006 165 103
- US-A1- 2011 013 608
- US-A1- 2011 040 969

## Description

### 1. Domaine de l'invention.

L'invention se rapporte au domaine des télécommunications et plus précisément à la gestion d'un réseau local filaire ou sans fil comportant au moins deux noeuds sans-fil.

### 2. Etat de l'art.

Selon l'état de la technique, plusieurs architectures de réseau local sans fil WLAN (de l'anglais « Wireless Local Area Network ») ou filaire LAN (de l'anglais « Local Area Network ») sont connues. Certaines d'entre elles utilisent un unique point d'accès pour couvrir un espace tel qu'une maison ou le palier d'un immeuble par l'utilisation par exemple d'une puissance d'émission élevée associée à différentes technologies sophistiquées telle que le MIMO (de l'anglais « Multiple Input Multiple Output » ou « entrée multiple sortie multiple » en français) ou l'OFDM (de l'anglais « Orthogonal Frequency Division Multiplexing » ou « Multiplexage par répartition de fréquences orthogonales » en français). Ainsi, un point d'accès d'un réseau Wi-Fi® (basé sur la norme 802.11 n) atteint un débit réel de 100 Mbit/s dans un rayon de 90 mètres grâce aux technologies MIMO et OFDM et un point d'accès d'un réseau HiperLAN2 atteint un débit de 50Mbit/s dans un rayon de 45 mètres. De telles architectures basées sur un point d'accès unique présentent l'inconvénient de produire un niveau élevé d'interférences vis-à-vis du voisinage et le risque de ne pas couvrir l'ensemble de l'espace à couvrir, notamment dans certaines zones séparées du point d'accès par des obstacles physiques, tels que des murs ou parois entraînant de fortes atténuations du signal émis. Par ailleurs, l'utilisation d'une puissance d'émission élevée soulève des questions de santé publique concernant les risques liés à une exposition prolongée à de tels rayonnements électromagnétiques.

Heusse et al. , dans « Performance anomaly of 802.11 b » in Proc. Of IEEE INFOCOM 2003 ont observé que, lorsque certains noeuds connectés à un même point d'accès ont un débit plus faible que les autres, la performance de tous les noeuds est globalement dégradées même s'ils sont placés à proximité du point d'accès. On rencontre fréquemment une telle situation est dans les réseaux locaux sans fil au sein desquels le signal émis par un noeud placé très loin du point d'accès est sujet aux interférences.

Pour pallier ce problème, le noeud modifie son type de modulation, ce qui dégrade le débit de sa connexion. En règle générale, les noeuds conformes à la norme 802.11 b dégradent progressivement leur débit de 11 Mb/s à 5,5, 2 ou 1 Mb/s lorsque des échecs de transmissions sont détectés. Dans une telle situation, cette réduction du débit impacte le débit de tous les autres noeuds de transmission en raison de la méthode d'accès au canal du CSMA/CA qui garantit une égalité à long terme de probabilité d'accès au canal pour tous les noeuds. Quand un noeud phagocyte le canal pendant une longue période parce que son débit est faible, il pénalise les autres noeuds qui ont un débit plus élevé.

Il existe des solutions pour résoudre ce problème lorsque les données sont uniquement transmises par le point d'accès (c'est-à-dire uniquement suivant le sens descendant i.e. « downlink only » en anglais) ou lorsqu'un planificateur temporel (en l'anglais « scheduler ») réalise un multiplexage temporel, coordonne les émissions des différents noeuds et supprime les zones de contention : c'est le cas par exemple du standard 802.16 ou du mode PCF du standard 802.11.

L'invention se situe dans le contexte d'un réseau filaire ou sans-fil CSMA où au moins 2 noeuds sans-fil cherchent également à transmettre des données à un même point d'accès (c'est-à-dire suivant le sens remontant i.e. « uplink» en anglais) et doivent partager le même canal pour ce faire. En effet, si un planificateur temporel est apte à coordonner les transmissions de données descendantes à partir des différents points d'accès, le planificateur n'est pas apte à coordonner les transmissions de données remontantes. Dans le cas d'une transmission de données remontante, un noeud sans fil peut monopoliser la ressource, bloquant ainsi toutes les autres communications. Parmi les réseaux mettant en oeuvre une méthode d'accès au canal de type aléatoire, il est possible de citer pour les réseaux filaires : GNeT utilisant le CSMA/CA, Apple's LocalTalk utilisant le CSMA/CA, Ethernet (basé sur la norme IEEE 802.3) utilisant le CSMA/CD (de l'anglais « Carrier Sense Multiple Access with Collision Détection » ou en français « Accès multiple à détection de porteuse avec détection de collisions ») ou ITU-T G.hn utilisant le CSMA/CA ; et pour les réseaux sans fil : réseau Wi-Fi® (basé sur la norme IEEE 802.11-2007) utilisant le CSMA/CA, réseau personnel sans fil WPAN (de l'anglais « Wireless Personal Area Network », basé sur la norme IEEE 802.15) utilisant le CSMA/CA ou encore WaveLAN utilisant le CSMA/CA. Un autre exemple est décrit dans US2006/0165103.

### 3. Résumé de l'invention.

L'invention a pour but de pallier ces inconvénients de l'art antérieur.

Plus particulièrement, l'invention a notamment pour objectif d'isoler les trafics de façon à ce qu'une dégradation de la liaison entre un noeud principal (ou point d'accès) et un premier noeud ne dégrade les liaisons entre ce noeud principal et les autres noeuds du réseau, notamment dans le cadre de communications adaptatives (de l'anglais « adaptive streaming » basé sur la norme http). Pour cela, le noeud principal sera découplé autant de points d'accès virtuels que de liaisons, un contrôleur réalisant le partage de l'accès au medium en fonction des besoins en bande passante (ou débit) exprimé par chacun des clients, de la modulation utilisée ou encore du type de flux à transmettre exigeant une qualité de service garantie ou se satisfaisant d'un mode au mieux (en anglais « best effort »). Le partage est réalisé au niveau du point d'accès au moyen d'évaluations de périodes pendant lesquelles chaque client est configuré pour communiquer pendant que les autres clients restent muets. La durée de ces périodes est déterminée à partir de la connaissance du débit total disponible, de la durée de la trame et du débit disponible au niveau de chaque client et qui est notamment fonction du taux de modulation employé et du débit requis par le flux de données.

L'invention concerne un procédé d'établissement d'une première et d'une deuxième association entre un noeud principal 11 et respectivement un premier et un deuxième noeud sans-fil 111, 112, la première association associant un premier point d'accès virtuel VAP1 du noeud principal 11 et le premier noeud 111, le premier point d'accès virtuel VAP1 émettant à destination du premier noeud 111 des premières trames de balise 411 comprenant une première information BSSID1 représentative de ladite première association BSS1, le premier point d'accès virtuel VAP1 étant identifié par un identifiant d'ensemble de services SSID.

Selon l'invention, lorsque le noeud principal 11 reçoit du noeud 112 une requête pour l'établissement de la deuxième association BSS2, le procédé comprend, au niveau d'un contrôleur, une étape de :
- recueil des paramètres de la première et de la deuxième association;
- création d'un deuxième point d'accès virtuel VAP2 du noeud principal 11 émettant à destination du deuxième noeud 112 des deuxièmes trames de balise 421 comprenant une deuxième information BSSID2 représentative de ladite deuxième association, ledit deuxième point d'accès virtuel VAP2 étant identifié par l'identifiant d'ensemble de services SSID ;
- estimation à partir desdits paramètres, d'un premier et d'un deuxième intervalle temporel 42, 41 pendant lequel respectivement le premier noeud 111 et le premier point d'accès virtuel VAP1 d'une part, le deuxième noeud 112 et le deuxième point d'accès virtuel VAP2 ont interdiction d'émettre ;
- établissement de la deuxième association entre le deuxième noeud 112 et le deuxième point d'accès virtuel VAP2,
- émission, à destination du premier et du deuxième noeud 111, 112 d'au moins une information de silence représentative d'une interdiction d'émettre 410, 420 pendant le premier ou le deuxième intervalle temporel 42, 41.

Avantageusement, un premier et un deuxième débit dr1, dr2 de transmission de données pratiqués par le premier et le deuxième noeud liés à la modulation physique employée respectivement par le premier et le deuxième noeud 111, 112 dans la première et la deuxième association, et un premier et un deuxième débit DR1, DR2 de transmission de données requis par respectivement le premier et le deuxième noeud 111, 112 en fonction de la nature des données transmises dans la première et la deuxième association sont des paramètres recueillis.

Avantageusement, le contrôleur fixe une durée de trame et le premier et le deuxième intervalle temporel 42, 41 ont une durée proportionnelle à la durée de ladite trame et proportionnelle au rapport du premier débit dr1 de transmission de données pratiqué par le premier noeud 111 et du premier débit DR1 de transmission de données requis par le premier noeud 111 et au rapport du deuxième débit dr1 de transmission de données pratiqué par le deuxième noeud 112 et du deuxième débit DR2 de transmission de données requis par le deuxième noeud 112.

Avantageusement, un débit dr total de transmission de donnée pratiqué par le premier et le deuxième noeud liés la modulation physique employée respectivement le premier et le deuxième noeud 111, 112 dans la première et la deuxième association, et un premier et un deuxième débit DR1, DR2 de transmission de donnée requis par respectivement le premier et le deuxième noeud 111, 112 en fonction de la nature des données transmises dans la première et la deuxième association sont des paramètres recueillis. Avantageusement, le contrôleur fixe une durée de trame et le deuxième et le premier intervalle temporel 42, 43 ont une durée proportionnelle à la durée de ladite trame et proportionnelle au premier débit DR1 de transmission de donnée requis par le premier noeud 111 rapporté au débit total de transmission de données pratiqué et au rapport du deuxième débit DR2 de transmission de données requis par le deuxième noeud 112 rapporté au débit total de transmission de données pratiqué.

Avantageusement, le noeud principal 11 est un point d'accès, et le premier et deuxième noeud 111, 112 sont associés au point d'accès.

Avantageusement, l'information de silence est comprise dans au moins un élément de silence 56 d'une trame de balise 411, 421.

Un des avantages de l'invention vient de ce qu'elle permet de découpler les échanges de données provenant de plusieurs noeuds. En particulier, la qualité de la liaison entre un client et un point d'accès n'est pas fonction de la qualité des liaisons entre ce point d'accès et d'autres clients.

L'invention permet en outre à un point d'accès dans un réseau sans fil CSMA d'allouer de la bande passante à ses clients.

L'invention peut être mise en oeuvre par une mise à jour du firmware ou du driver des points d'accès : en particulier elle est déployable sur les points d'accès existants.

L'invention est enfin, directement compatible avec les stations sans-fil supportant le standard 802.11h (obligatoire dans la bande des 5GHz).

### 4. Liste des figures.

L'invention sera mieux comprise, et d'autres particularités et avantages apparaîtront à la lecture de la description qui va suivre, la description faisant référence aux dessins annexés parmi lesquels :
- la figure 1 illustre un système sans fil mettant en oeuvre plusieurs points d'accès virtuels dans un point d'accès associés à plusieurs stations, selon un mode de réalisation particulier de l'invention ;
- les figures 2 et 3 illustrent schématiquement respectivement un point d'accès et une station du système de la figure 1, selon un mode de réalisation particulier de l'invention ;
- la figure 4 illustre schématiquement la structure d'une trame de communication du système de la figure 1, selon un mode de réalisation particulier de l'invention ;
- la figure 5 illustre schématiquement le contenu d'une trame balise transmise par au moins un noeud du système de la figure 1, selon un mode de réalisation particulier de l'invention ;
- la figure 6 illustre un procédé d'établissement d'une première et d'une deuxième association découplée entre un noeud principal et un premier et un deuxième noeud respectivement selon un mode de réalisation particulier de l'invention ;
- la figure 7 est un tableau présentant différents débits de données d'un noeud d'un système sans-fil en fonction du mode physique de modulation.

### 5. Description détaillée de modes de réalisation de l'invention.

L'invention va maintenant être décrite, de manière non limitative, selon un mode de réalisation particulier mettant en oeuvre un réseau local sans fil de type Wi-Fi® (se référant aux normes IEEE 802.11a, IEEE 802.11b, IEEE 802.11d, IEEE 802.11e, IEEE 802.11g, IEEE 802.11h, IEEE 802.11i, IEEE 802.11j (édité par l'IEEE sous la référence IEEE 802.11™-2007 avec comme titre « IEEE Standard for Information technology - telecommunications and information exchange between systems - Local and metropolitan area networks - Specific requirements / Part 11 : Wireless LAN Medium Access Control (MAC) and Physical Layer (PHY) Specifications ») ou IEEE 802.11n). L'invention n'est bien entendu pas limitée à une mise en oeuvre dans un réseau sans fil de type Wi-Fi®, les principes de l'invention étant applicables par l'homme du métier à tout type de réseau local filaire ou sans fil utilisant une méthode d'accès au canal de type partiellement aléatoire, par exemple du type ALOHA, CSMA, CSMA/CA ou CSMA/CD, par exemple à un réseau local filaire de type GNeT, Apple's LocalTalk, Ethernet (basé sur la norme IEEE 802.3), ITU-T G.hn ou à un réseau local sans fil de type WPAN (basé sur la norme IEEE 802.15), WaveLAN ou ALOHAnet.

Afin de réduire les collisions, le temps d'antenne dans un réseau est divisé en n partitions, n correspondant au nombre de noeuds dans le réseau. L'équité entre les différents noeuds est garantie puisque chaque noeud aura un temps dédié correspondant à celui nécessaire à l'envoi de son trafic en utilisant la modulation la plus élevée. L'hypothèse est faite d'un réseau non saturée où le trafic global (lorsqu'il est transmis au débit le plus élevé) ne dépasse pas la capacité maximale du réseau. Chaque partition de temps correspond à un réseau local virtuel géré par un point d'accès virtuel ; sa mise en oeuvre est décrite dans la suite de la description.

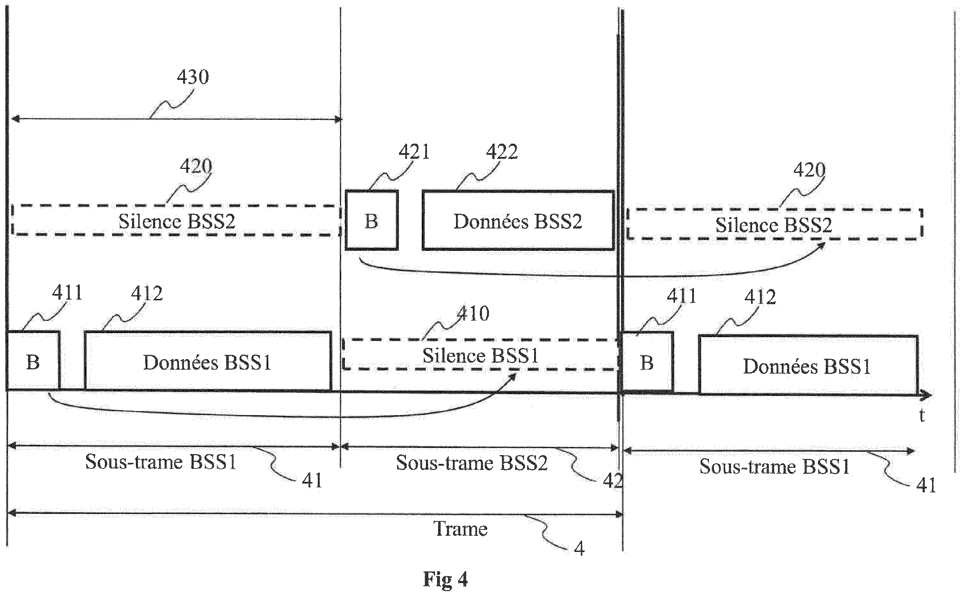

La mise en oeuvre de l'allocation de canal et de la protection de celui-ci est réalisée par via un élément de silence (de l'anglais « Quiet Element » noté QE) disponible dans la norme. Cet élément, transmis par la la trame balise, permet à un point d'accès virtuel d'interdire toute transmission à ses stations au cours d'un intervalle de temps alloué à d'autres points d'accès virtuels. Les trames balises de chaque BSS peuvent comporter plusieurs éléments de silence. Ainsi représenté sur la figure 4, deux éléments de silence 410, 420 sont utilisés afin de créer deux sous-trames dans un intervalle de balise (temps entre la transmission de deux balises). Si les transmissions de trames balises sont décalées (entre les deux BSS), les intervalles de silence sont toujours synchronisés. Et si la transmission des trames balises était également retardée par un canal occupé, les intervalles de silence resteraient toujours synchronisées puisque les intervalles de silence sont définis relativement l'heure d'émission cible de la balise TBTT (de l'anglais « Target Beacon Transmission Time »).

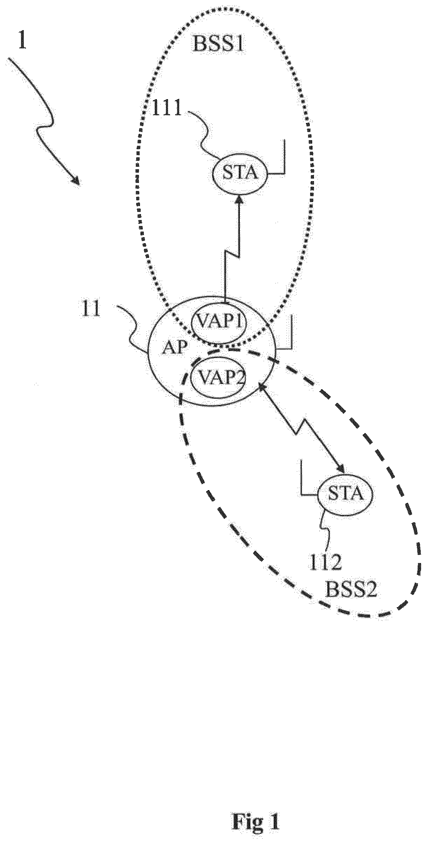

La **figure 1** illustre un système 1 de communication sans fil de type réseau local sans fil selon un mode particulier de réalisation de l'invention, mettant en oeuvre plusieurs noeuds.. En mode infrastructure du réseau, le noeud 11 fait office de point d'accès mobile ou fixe et l'autre partie des noeuds 111, 112 fait office de station mobile ou fixe. La station 111 est associée au point d'accès 11 pour la communication (c'est-à-dire l'émission et/ou la réception) de données et forme avec le point d'accès 11 un premier ensemble BSS 1 (de l'anglais « Basic Service Set » ou en français « Ensemble de services de base »). Cette association est réalisée par un premier point d'accès virtuel VAP1 compris dans le point d'accès 11. L'association entre la station 111 et le point d'accès virtuel VAP1 ou l'ensemble station et point d'accès virtuel sont utilisés de façon indifférente dans la suite de la description et nommé BSS1. Un élément d'information BSSID1 (de l'anglais « Basic Service Set IDentifier » ou en français « Identifiant d'ensemble de services de base ») représentative de cette première association BSS1 est transmis dans les trames balises émises par le premier point d'accès virtuel VAP1. La station 112 est associée au point d'accès 11 pour la communication de données et forme avec le point d'accès 11 un deuxième ensemble BSS 2. Cette association est réalisée par un deuxième point d'accès virtuel VAP2 également compris dans le point d'accès 11. Un élément d'information BSSID2 représentative de cette deuxième association est transmis dans les trames balises émises par le deuxième point d'accès virtuel VAP2.

Les deux ensembles BSS 1 et BSS 2 sont nativement connectés dans le point d'accès 11 pour former un ensemble de services étendu ESS (de l'anglais « Extended Service Set »). Un élément d'information SSID (de l'anglais « Service Set IDentifier » ou en français « Identifiant d'ensemble de services ») représentative de l'ensemble comprenant BSS 1 et BSS 2 qui représente le nom du système 1 sans fil, est également transmis dans les trames balises émises par les points d'accès virtuels VAP1, VAP2.

La station 111, respectivement 112 est apte à échanger (envoyer ou recevoir) des données (ou paquets de données) avec le point d'accès virtuel VAP1, respectivement VAP2 avec lequel elle forme le BSS 1, respectivement BBS 2. De manière avantageuse, un BSS utilise un canal physique particulier pour échanger des données, un canal physique étant caractérisé par un groupe de paramètres comprenant une liste de sous-porteuses, un intervalle de temps, un niveau d'interférence et dans le cas d'un accès CDMA (de l'anglais « Code Division Multiple Access » ou « Access multiple par Répartition par Code») d'un même code d'étalement.

La bande des 5 GHz correspond par exemple aux bandes de fréquences dont toutes les fréquences sont comprises entre 5,15 GHz et 5,35 GHz ou comprise entre 5,47 GHz et 5,875 GHz. Un canal physique à 5 GHz correspond à un canal de largeur 10, 20 ou 40 MHz par exemple, dont toutes les fréquences sont situées dans l'un des intervalles de fréquence mentionnés ci-dessus. La bande des 2,4 GHz correspond par exemple aux bandes de fréquences dont toutes les fréquences sont comprises entre 2,4 GHz et 2,5 GHz. Un canal physique à 2,4 GHz correspond à un canal de largeur 22 MHz par exemple, dont toutes les fréquences sont situées dans l'intervalle de fréquence (2,4 - 2,5 GHz) mentionné ci-dessus.

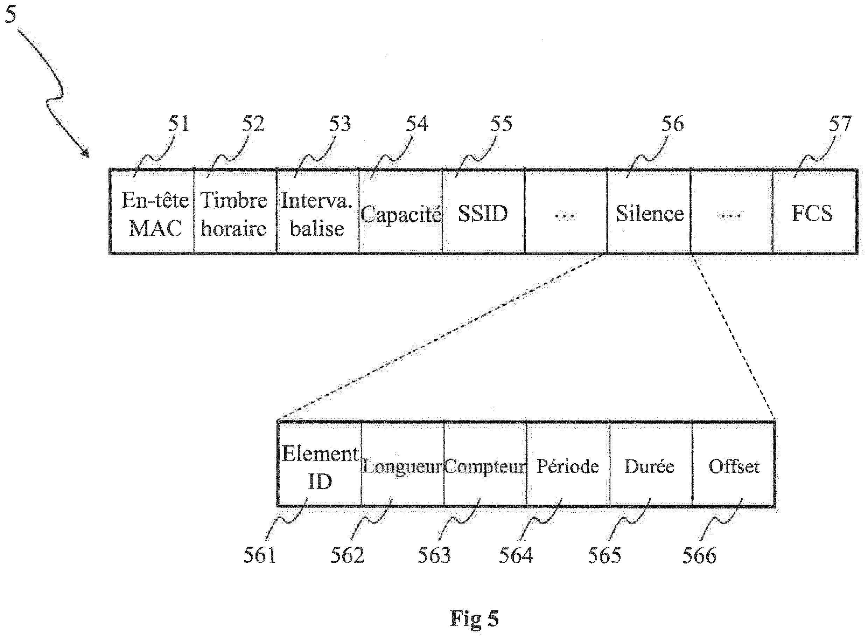

De manière avantageuse, notamment dans le cas d'un accès CSMA qui ne prévoit de mécanisme de coordination des échanges de données mais un accès aléatoire au canal physique, le partage du canal physique pour échanger les données descendantes ou remontantes est réalisé par une division temporelle du canal en fonction des différents débits requis pour chaque liaison. La mise en oeuvre de cette division temporelle comprend la définition d'éléments de silence 410, 420 (de l'anglais « Quiet Element ») disponible dans la norme. Un élément de silence, appartenant à la trame balise (de l'anglais « Beacon »), permet à un point d'accès virtuel (VAP) d'interdire toute transmission de données du point d'accès virtuel vers la station auquel il est associé et de la station vers ce point d'accès virtuel pendant le temps réservé à d'autres points d'accès virtuels. La définition des intervalles temporels de silence des points d'accès virtuels et la trame balise correspondante envoyée par le point d'accès virtuel sera détaillée en référence aux figures 4 et 5.

De manière avantageuse, le point d'accès 11 du système 1 est un appareil fixe. Toutefois, l'invention est compatible avec un point d'accès 11 mobile.

Les stations 111 à 112 sont indifféremment des appareils mobiles ou fixes, par exemple un téléphone portable, un terminal mobile, un ordinateur portable (de l'anglais « laptop »), un ordinateur personnel PC (de l'anglais « Personal Computer »), un assistant personnel PDA (de l'anglais « Personal Digital Assistant »).

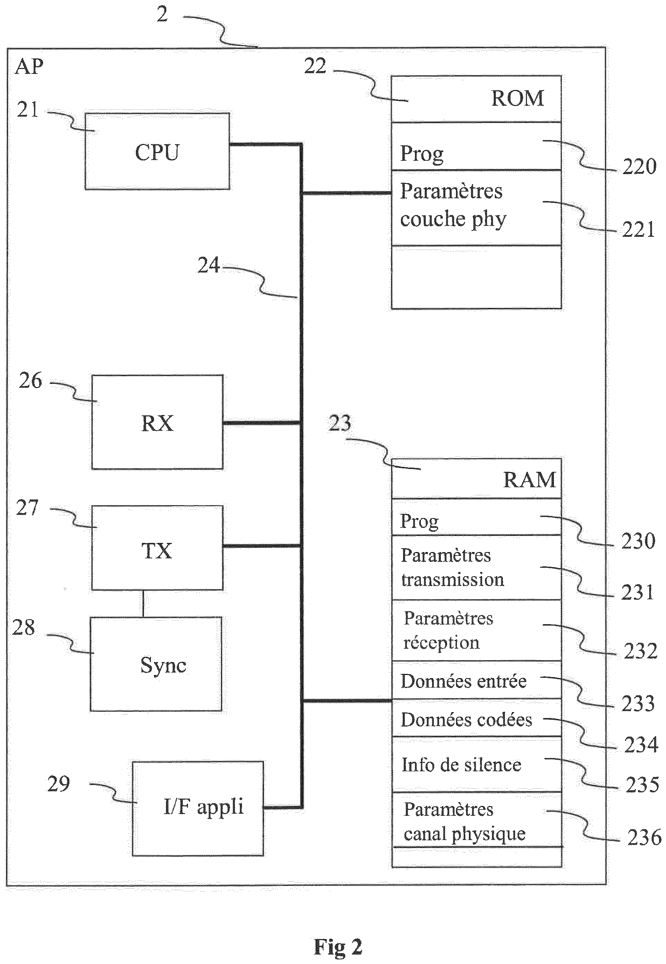

La **figure 2** illustre schématiquement un exemple de réalisation matérielle d'un point d'accès 2 correspondant par exemple au noeud 11 de la figure 1.

Le point d'accès 2 comprend les éléments suivants, reliés entre eux par un bus 24 d'adresses et de données qui transporte également un signal d'horloge :
- un microprocesseur 21 (ou CPU) ;
- une mémoire non volatile de type ROM (de l'anglais « Read Only Memory ») 22 ;
- une mémoire vive ou RAM (de l'anglais « Random Access Memory ») 23 ;
- une interface radio 26 ;
- une interface 27 adaptée à la transmission de données (par exemple diffusion de services ou transmission multipoint à point ou point à point) et réalisant notamment les fonctions d'un codeur et/ou de modulateurs OFDM ;
- une interface 28 adaptée à calculer un offset de synchronisation entre les points d'accès virtuels c'est-à-dire entre les références de temps des trames de balises de BSS 1 et BSS 2, et à synchroniser l'interface 27 ; et/ou
- une interface MMI (ou interface homme/machine de l'anglais « Man Machine Interface ») 29 ou une application spécifique adaptée à l'affichage d'informations pour un utilisateur et/ou l'entrée de données ou de paramètres (par exemple le paramétrage des sous-porteuses et des données à transmettre).

On observe que le mot « registre » utilisé dans la description des mémoires 22 et 23 désigne dans chacune des mémoires mentionnées, aussi bien une zone de mémoire de faible capacité (quelques données binaires) qu'une zone mémoire de grande capacité (permettant de stocker un programme entier ou tout ou partie des données représentatives de données reçues ou à diffuser).

La mémoire ROM 22 comprend notamment :
- un programme « prog » 220 ; et
- des paramètres 221 de couches physiques.

Les algorithmes mettant en oeuvre les étapes du procédé propre à l'invention et décrits ci-après sont stockés dans la mémoire ROM 22 associée au point d'accès 2 mettant en oeuvre ces étapes. A la mise sous tension, le microprocesseur 21 charge et exécute les instructions de ces algorithmes.

La mémoire vive 23 comprend notamment :
- dans un registre 230, le programme de fonctionnement du microprocesseur 21 chargé à la mise sous tension du point d'accès 2 ;
- des paramètres de transmission 231 (par exemple paramètres de modulation, de codage, de récurrence des trames, d'une table avec le temps allouée à chaque station et éventuellement autres paramètres (type de flux, identifiant de la station, adresse MAC, débit requis, priorité)) ;
- des paramètres de réception 232 (par exemple paramètres de modulation, de codage, de récurrence des trames) ;
- des données entrantes 233 ;
- des données codées 234 pour la transmission des données.
- une information de silence 235 ; et
- des paramètres de canal physique 236 (par exemple allocation d'intervalles temporel déterminés, d'un code déterminé et/ou d'intervalles de sous-porteuses déterminés à l'émission des données par le point d'accès 2).

L'interface radio 26 est adaptée à la réception des signaux émis le cas échéant par les noeuds 111 ou 112 du système 1.

Le contrôleur réalisant l'allocation des points d'accès virtuels aux différentes stations et estimant le partage temporel du médium est avantageusement mis en oeuvre de la façon logiciel dans le processeur 21. Les point d'accès virtuels sont également avantageusement mis en oeuvre de la façon logiciel dans le processeur 21.

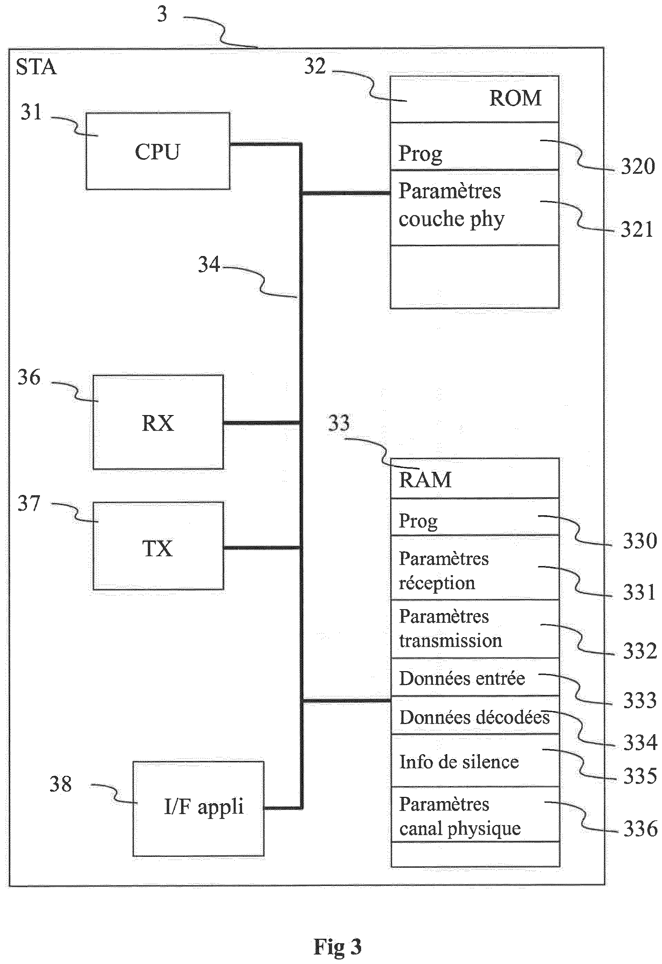

La **figure 3** illustre schématiquement un exemple de réalisation matérielle d'une station 3 appartenant au système 1, correspondant par exemple au noeud 111 ou 112 et adapté à recevoir et décoder les signaux émis par le point d'accès 2, à émettre des signaux vers le point d'accès 2.

La station 3 comprend les éléments suivants, reliés entre eux par un bus 34 d'adresses et de données qui transporte également un signal d'horloge :
- un microprocesseur 31 (ou CPU) ;
- une mémoire non volatile de type ROM (de l'anglais « Read Only Memory ») 32 ;
- une mémoire vive ou RAM (de l'anglais « Random Access Memory ») 33 ;
- une interface radio 36 ; et
- une interface 37 adaptée à la transmission de données ; et
- une interface 38 MMI adaptée à l'affichage d'informations pour un utilisateur et/ou l'entrée de données ou de paramètres (par exemple le paramétrage des sous-porteuses et des données transmises).

On observe que le mot « registre » utilisé dans la description des mémoires 32 et 33 désigne dans chacune des mémoires mentionnées, aussi bien une zone de mémoire de faible capacité qu'une zone mémoire de grande capacité (permettant de stocker un programme entier ou tout ou partie des données représentatives d'ensembles de données reçus ou décodés).

La mémoire ROM 32 comprend notamment :
- un programme « prog » 320 ; et
- des paramètres 321 de couches physiques.

Les algorithmes mettant en oeuvre les étapes du procédé propre à l'invention et décrits ci-après sont stockés dans la mémoire ROM 32 associée à la station 3 mettant en oeuvre ces étapes. A la mise sous tension, le microprocesseur 31 charge et exécute les instructions de ces algorithmes.

La mémoire vive 33 comprend notamment :
- dans un registre 330, le programme de fonctionnement du microprocesseur 31 chargé à la mise sous tension du terminal mobile 3;
- des paramètres de réception 331 (par exemple paramètres de modulation, de codage, de récurrence des trames) ;
- des paramètres de transmission 332 (par exemple paramètres de modulation, de codage, de récurrence des trames) ;
- des données entrantes 333 correspondant aux données reçues et décodées par le récepteur 36 ;
- des données décodées 334 mises en forme pour être transmises à l'interface vers l'application 39 ;
- une information de silence 235 ; et
- des paramètres de canal physique 236 (par exemple allocation d'une bande de fréquence déterminée, d'un code déterminé à l'émission de données).

D'autres structures du point d'accès 2 et/ou de la station 3 que celles décrites en regard des figures 2 et 3 sont compatibles avec l'invention. En particulier, selon des variantes, des points d'accès et/ou des terminaux mobiles compatibles avec l'invention sont mis en oeuvre selon une réalisation purement matérielle ("hardware" en anglais), par exemple sous forme d'un composant dédié (par exemple dans un ASIC ou FPGA ou VLSI) (respectivement « Application Specific Integrated Circuit » en anglais, signifiant « Circuit Intégré à vocation d'une application spécifique », « Field-Programmable Gate Array » en anglais, signifiant « Réseau de Portes Programmable In-Situ », « Very Large Scale Integration » en anglais, signifiant « Intégration à très grande échelle ») ou de plusieurs composants électroniques intégrés dans un appareil ou encore sous forme d'un mélange d'éléments matériels et d'éléments logiciels (« software » en anglais).

L'interface radio 36 est adaptée à la réception des signaux émis par le noeud 11 du système 1.

La **figure 4** illustre schématiquement la structure d'une trame de communication du système 1, selon un exemple de mise en oeuvre non limitatif particulièrement avantageux de l'invention.

La trame de communication 4 est divisée temporellement en deux sous-trames 41, 42, chaque sous-trame étant allouée aux communications s'établissant entre les noeuds d'un BSS donné. Dans le cas d'un réseau en mode infrastructure, chaque sous-trame est allouée au point d'accès de chaque BSS. Dans le système 1, la sous-trame 41 est allouée au point d'accès virtuel VAP1 de BSS1 et la sous-trame 42 est allouée au point d'accès virtuel VAP2 de BSS2. Dans chaque sous-trame, les noeuds du BSS (à savoir le point d'accès virtuel et la station qui lui est associée) utilisent les mécanismes standards MAC de la norme IEEE 802.11-2007 connus de l'homme du métier : mécanismes du CSMA/CA avec par exemple l'utilisation de trames RTS/CTS pour réserver le canal, le « backoff », qualité de service QoS EDCA (de l'anglais « Quality of Service »), A-MPDU, bloc d'acquittement de réception de trames ACK, etc. ou tout autre mécanisme décrit dans la norme IEEE 802.11-2007. De manière avantageuse, l'allocation des sous-trames temporelles de la trame de communication aux BSS est réalisée par un contrôleur. Le contrôleur est par exemple implémenté dans le point d'accès 11 du réseau ESS du système 1 à coté des points d'accès virtuels. Chaque point d'accès virtuel du réseau ESS comprenant les deux BSS reçoit du contrôleur une information représentative de l'allocation des sous-trames. Selon une variante, un des points d'accès virtuel du réseau ESS opère en qualité de contrôleur et émet l'information représentative de l'allocation aux autres points d'accès virtuel. Selon une autre variante, l'allocation des sous-trames est enregistrée en mémoire de chaque point d'accès virtuel des BSS1 et BSS2, par exemple par un utilisateur gestionnaire du réseau.

Au cours de la première sous-trame 41, le point d'accès virtuel VAP1 de BSS1 émet une trame de balise (de l'anglais « beacon frame ») 411 à destination de la station 111 qui lui est associée. La trame de balise comprend avantageusement une information de silence représentative de l'interdiction d'émettre pendant la sous-trame 42 allouée à BSS2. A réception de cette interdiction d'émettre pendant la sous-trame 42, la station 111 positionne son vecteur d'allocation de réseau (conformément à la norme IEEE 802.11-2007) NAV (de l'anglais «Network Allocation Vector »), s'interdisant ainsi toute émission de données pendant le ou les intervalles temporels correspondant à la sous-trame 42. Le point d'accès virtuel VAP1 positionne également son NAV pendant le ou les mêmes intervalles temporels. La communication de données entre le point d'accès virtuel VAP1, donc le point d'accès 11, d'une part et la station 111 d'autre part s'effectue pendant le ou les intervalles 412 et un silence 410 est imposé aux noeuds de BSS1 pendant le ou les intervalles temporels alloués à la sous-trame 42.

Au cours de la deuxième sous-trame 42, le point d'accès virtuel VAP2 de BSS2 émet une trame de balise 421 à destination de la station 112 qui lui est associée. La trame de balise 421 comprend avantageusement une information de silence représentative de l'interdiction d'émettre pendant la ou les sous-trames 41 allouées à BSS1. A réception de cette interdiction d'émettre pendant la sous-trame 41, le point d'accès virtuel VAP2 et la station 112 positionnent chacun leur vecteur d'allocation de réseau NAV, leur interdisant ainsi toute émission de données pendant les intervalles temporels correspondant à la sous-trames 41. La communication de données entre le point d'accès virtuel VAP2, donc le point d'accès 11, d'une part et la station 112 d'autre part s'effectue pendant le ou les intervalles 422 et un silence 420 est imposé aux noeuds de BSS2 pendant le ou les intervalles temporels de la sous-trame 41.

La **figure 5** illustre schématiquement le contenu d'une trame balise (de l'anglais « beacon frame ») selon un exemple de mise en oeuvre non limitatif particulièrement avantageux de l'invention.

La trame balise 5 est avantageusement conforme au standard IEEE 802.11-2007. Le champ «En-tête MAC » (de l'anglais « Medium Access Control Header ») 51 contient une information représentative des adresses MAC source et destination, la destination adresse étant par exemple paramétrée pour contenir toutes les adresses des stations (correspondant à une adresse de type diffusion (de l'anglais « broadcast ») du BSS considéré pour forcer toutes les stations du BSS considéré de recevoir et traiter chaque trame de balise. Le champ d'en-tête MAC 51 comprend par exemple également le type et le sous-type de la trame (par exemple type = trame de gestion, sous-type = balise) ou encore l'identifiant du BSS BSSID comprenant le point d'accès virtuel émettant la trame de balise (correspondant par exemple à l'adresse source, c'est-à-dire à l'adresse du point d'accès virtuel émettant la trame de balise).

Le corps de trame de balise comprend tous les champs placés entre l'en-tête MAC et un champ FCS (de l'anglais « Frame Check Sequence » ou en français « Séquence de vérification de trame »). Le champ timbre horaire 52 (de l'anglais « Timestamp ») comprend une information représentative d'une heure utilisée par une station pour mettre à jour son horloge locale. Cette information permet aux stations associées au point d'accès émetteur de la trame de balise de se synchroniser.
Le champ intervalle de balise 53 (de l'anglais « Beacon Interval » comprend une information représentative de la durée s'écoulant entre l'émission de deux trames de balise. Cette information permet notamment aux stations souhaitant se mettre en état de veille de savoir quand elles devront se mettre en état d'écoute pour recevoir la trame de balise. L'intervalle de balise peut par exemple être paramétré à 100 unité temporelles TU (de l'anglais « Time Unit »), c'est-à-dire à 100*1024µs = 102.4 ms.
Le champ information de capacité 54 (de l'anglais « Capability Information ») comprend une information représentative des pré-requis nécessaires à une station pour appartenir au BSS comprenant le point d'accès ayant émis la trame de balise, tel que par exemple la nécessité d'utiliser une clé WEP (de l'anglais « Wired Equivalent Privacy » ou en français « Confidentialité équivalente au filaire ») pour participer au réseau ou encore par exemple une information représentative du support de la gestion de spectre DFS (de l'anglais « Dynamic Frequency Selection » ou en français « Sélection de fréquence dynamique »). Pour indiquer le support de la gestion de spectre, le champ capacité 54 comprend une information de support de gestion de spectre se traduisant par exemple par un bit de gestion de spectre (de l'anglais « Spectrum Management bit ») positionné à 1. Une station recevant cette information doit positionner dot11 SpectrumManagementRequired à vrai (de l'anglais « true ») avant de s'associer au point d'accès ayant émis la trame de balise. Si une station ne supporte pas la gestion de spectre, cette dernière ne peut pas s'associer au BSS considéré.
Le champ SSID (de l'anglais «Service Set Identifier » ou en français « Identifiant d'ensemble de services ») comprend une information représentative de l'identification du BSS comprenant le point d'accès émetteur de la trame de balise. Avant de pouvoir s'associer à un BSS particulier, une station doit avoir le même SSID que le point d'accès virtuel. Le point d'accès virtuel inclut alors par défaut le SSID dans la trame de balise qu'il émet.
Le champ silence 56 (de l'anglais « Quiet ») comprend une information représentative d'un élément de silence (de l'anglais « Quiet element »), c'est-à-dire une information interdisant au point d'accès virtuel et aux stations appartenant à un même BSS d'émettre des données ou paquets de données pendant un ou plusieurs intervalles temporels donnés d'une ou plusieurs trames de communication d'un réseau. Le champ silence comprend plusieurs champs, dont :
- un champ « élément ID » 561 comprenant une information représentative de l'identifiant de l'élément de silence, un élément de silence étant identifié par l'ID 40 dans la norme 802.11-2007 ;
- un champ « Longueur » 562 comprenant une information représentative de la longueur cumulée (en octets) des champs suivant le champ longueur et spécifiques à l'élément de silence, cette longueur étant de 8 octets selon la norme 802.11-2007; ainsi que quatre champs spécifiques à un élément de silence :
- un champ « Compteur » 563 comprenant une information représentative du nombre de TBTT jusqu'au prochain intervalle de balise durant lequel l'intervalle de silence débutera. Une valeur de 1 pour le champ « Compteur » signifie que le prochain intervalle de silence débutera pendant l'intervalle de balise suivant le prochain TBTT, c'est-à-dire suivant le premier TBTT positionné après l'émission de la trame de balise décrivant l'élément de silence considéré ;
- un champ « Période » 564 comprenant une information représentative du nombre d'intervalles de balise (de l'anglais « beacon interval ») qu'il y a entre deux intervalles de silence correspondant à un élément de silence d'un même BSS ;
- un champ « Durée » 565 comprenant une information représentative de la durée d'un intervalle de silence (de l'anglais « Quiet interval ») représentée par exemple par un nombre d'unités de temps TU, par exemple 44 TU, soit 44*1024µs = 45.056 ms. Cette durée correspond à la durée pendant laquelle le point d'accès virtuel et la/les stations d'un BSS donné ne pourront pas émettre de données ; et
- un champ « Offset » 566 comprenant une information représentative du décalage temporel, exprimée en unités de temps TU, existant entre le début de l'intervalle de silence et l'heure d'émission cible de balise TBTT (de l'anglais « Target Beacon Transmission Time ») (par exemple 6 TUs), le TBTT considéré étant spécifié dans le champ « Compteur » 563.

De manière avantageuse, la trame de balise 5 décrit plusieurs éléments de silence (par exemple 2, 3, 5, 10 ou 20), c'est-à-dire que la trame 5 comprend plusieurs champs silence, chaque champ silence comprenant une information représentative d'un élément de silence. Chaque champ silence n'étant associé qu'à un seul élément de silence, la trame de balise 5 comprend autant de champs silence qu'il y a d'éléments de silence décrits dans la trame de balise. Lorsqu'une trame de communication d'un réseau comprenant par exemple 2 BSS est par exemple divisée en 10 sous-trames, 5 sous-trames étant alloués à chacun des BSS, la trame de balise émise par le premier BSS comprend par exemple cinq champs silence pour la description de cinq éléments de silence correspondant chacun à une des cinq sous-trames allouées à la communication du deuxième BSS et la trame de balise émise par le deuxième BSS comprend par exemple cinq champs silence pour la description de cinq éléments de silence correspondant chacun à une des cinq sous-trames allouées à la communication du premier BSS.

La trame de balise 5 comprend également un champ FCS (de l'anglais « Frame Check Sequence » ou en français « Séquence de vérification de trame ») ou un champ CRC (de l'anglais « Cyclic Redundancy Checking » ou en français « Contrôle de Redondance Cyclique ») utilisés pour la correction et la détection d'erreur.

De manière avantageuse, chaque trame de balise émise par un point d'accès virtuel comprend la description du ou des éléments de silence.

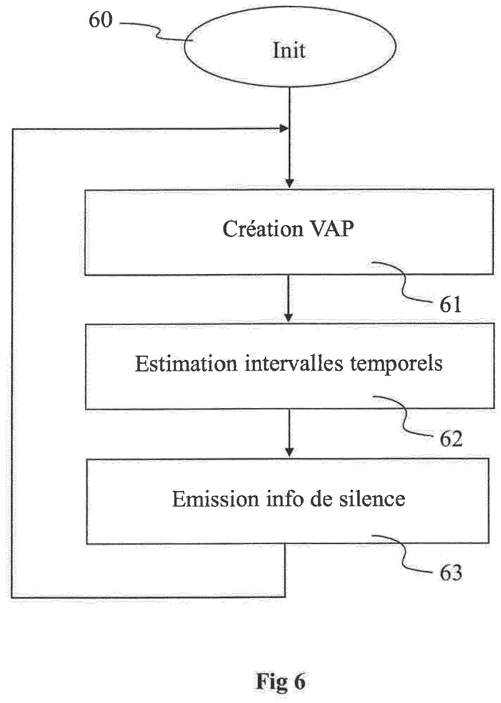

La **figure 6** illustre un procédé d'établissement d'une première et d'une deuxième association entre un noeud principal et respectivement un premier et un deuxième noeud sans-fil, mis en oeuvre par le noeud principal du système 1, selon un exemple de mise en oeuvre non limitatif particulièrement avantageux de l'invention.

Au cours d'une étape d'initialisation 60, les différents paramètres du noeud principal sont mis à jour. En particulier, les paramètres correspondant aux signaux à émettre ou à recevoir et aux canaux correspondants sont initialisés d'une manière quelconque (par exemple suite à la réception de messages d'initialisation émis par un noeud du réseau, dit noeud maître ou par un point d'accès du réseau ou par un contrôleur ou un serveur non représenté du système 1, ou encore par des commandes d'un opérateur).

Ensuite, au cours d'une étape 61, une pluralité de points d'accès virtuels sont créés. Selon une première variante, un premier point d'accès virtuel VAP1 est créé dans le point d'accès 11. La première station 111 est associée à ce point d'accès virtuel et forme avec celui-ci un ensemble BSS 1 identifié par son BSSID1. Le deuxième point d'accès virtuel VAP2 est créé ultérieurement lorsque le point d'accès 11 reçoit une requête d'établissement d'une deuxième association par une station 112. Les ensembles BSS1 et BSS2 appartiennent avantageusement au même réseau identifié par son SSID. Selon une deuxième variante, les points d'accès virtuels VAP1 et VPA2 sont créés lorsque le point d'accès 11 reçoit une requête d'établissement d'une deuxième association. Le point d'accès 11 est alors transformé en un premier point d'accès virtuel VAP1. Selon une troisième variante, un ensemble de points d'accès virtuels sont créés simultanément après la phase d'initialisation formant ainsi une provision de points d'accès virtuels disponibles pour les requêtes d'établissement d'association à venir. Selon un mode de réalisation avantageux, autant de points d'accès virtuels, et donc de BSS sont créés qu'il y a de stations à isoler. Dans une variante, une seule station est isolée des autres stations. Cette variante est particulièrement bien adaptée à un environnement dans lequel on cherche à garantir la qualité de service par exemple pour un flux TV. Ainsi, un VAP1 sera créé et associé à plusieurs stations qui se partagent l'accès au medium pendant un intervalle temporel déterminé, formant un ensemble BSS1. Dans cet ensemble BSS1, les problèmes de collision, dégradation de liens peuvent se poser. Un VAP2 sera créé et associé à une seule station, dans notre exemple celle du flux TV. Cette station est avantageusement isolée des autres stations et non affectée par les collisions, dégradation de liens dans le BSS1, qui a un intervalle. La qualité de service pour le flux TV est ainsi garantie dans la mesure où la liaison entre le VAP2 et la station n'est pas dégradée. Dans une autre variante, le point d'accès est considéré comme une station et est isoler des autres stations regroupés dans un même ensemble BSS. Cette variante présente l'avantage de permettre d'isoler les flux de communications descendants du point d'accès des flux de communication remontant des stations. Selon un mode avantageux de réalisation, le point d'accès (ou le contrôleur du point d'accès) décide sur quel VAP la station va être associée.

Ensuite, au cours d'une étape 62, une estimation des intervalles temporels réservés pour chacun des BSS est réalisée à partir de paramètres de la première et de la deuxième association. Les paramètres recueillis pour chaque association appartiennent au groupe comprenant :
- les besoins en bande passante (ou débit DR1, DR2) exprimé (ou requise) par chacune des stations ;
- de la bande passante (ou débit dr1, dr2) réelle disponible (ou pratiquée) sur le canal lié à la modulation physique employée ;
- de la bande passante totale ou totale restante ;
- d'une modulation prédéfinie ;
- de la modulation effectivement utilisée entre un point d'accès virtuel et une station ;
- la nature du flux à transmettre par exemple un flux TV exigeant une qualité de service garantie ou par exemple un flux de pures données se satisfaisant d'un mode de transmission au mieux (en anglais « best effort ») ;
- la priorité du flux.

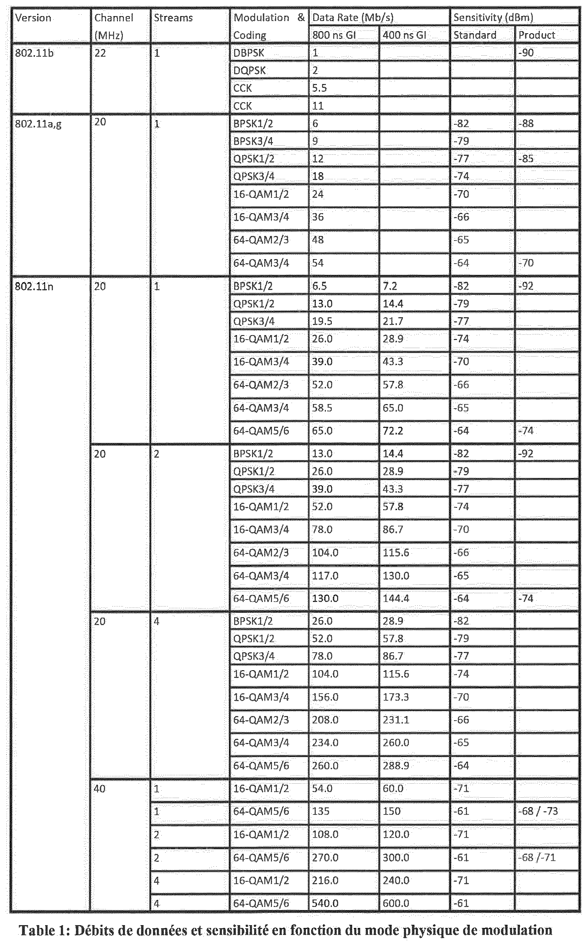

Selon une variante, le groupe de paramètres pour estimer le temps d'accès réservé (ou par complémentarité le temps de silence des autres stations) à chacune des stations ne comprend qu'un seul ou deux paramètres listés ci-dessus. Selon une autre variante, le groupe de paramètres pour estimer le temps d'accès est combinaison d'au moins deux des paramètres du groupe définis ci-dessus, par exemple le rapport entre le débit pratiqué et le débit requis des premières et deuxièmes associations a savoir DR1/dr1 et DR2/dr2. Le temps d'accès de BSS1 est par exemple proportionnel DR1/dr1. Le temps de silence de BSS2 est alors proportionnel à (1- DR1/dr1) dans le cas de deux ensembles BSS. Le temps d'accès de BSS2 est par exemple proportionnel DR2/dr2. Le temps de silence de BSS2 est alors proportionnel à (1- DR1/dr1) dans le cas de deux ensembles BSS. Selon une autre variante dans laquelle les clients sont adaptés à communiquer avec une modulation identique (dr1= dr2=dr), le temps d'accès est calculé en fonction d'une modulation prédéfinie. Par exemple pour le calcul, la modulation autorisant le débit le plus élevé est choisie comme modulation prédéfinie. Différents débits disponibles selon la modulation sont ainsi illustrés sur la **figure 7****.** Ainsi la bande passante totale ou totale restante est calculée selon cette modulation prédéfinie. En outre le débit requis DR, c'est-à-dire la bande passante à allouer la station est calculée en fonction du débit nécessaire pour une transporter des données vidéo, auquel sont ajoutées les données de transport (des couches MAC/ et physique) de la vidéo. Le temps à allouer à un client est alors égal au rapport du débit requis pour ce client sur le débit total rapporté au temps total ((DR1/dr)*T). L'intervalle temporel de silence est alors de (1- DR1/dr)*T.

Le contrôleur détermine une durée trame de partage temporel de l'accès au medium (TDMA frame) en fonction des temps calculés. Le contrôleur divise la trame en intervalles temporels qui sont alloués aux BSS. C'est-à-dire que le contrôleur détermine les intervalles de temps où il va interdire à une station d'émettre donc les intervalles de temps alloués aux autres stations. Les temps d'accès est celui réservés à un BSS (donc ses stations).

Selon une variante, les paramètres sont fixes (par exemple le même débit est requis vers une même station), les intervalles temporels peuvent alors être fixés au départ.

Avantageusement, le point d'accès ou le contrôleur maintient une table avec le temps alloué à chaque station et éventuellement d'autres paramètres (type de flux, identifiant de la station, adresse MAC, débit requis, priorité, ...). Lorsqu'une première station 111 s'associe à un premier point d'accès virtuel VAP1, le contrôleur estime le temps d'accès au medium qu'il va réserver à la première station 111 pour ses transmissions incluant les émissions vers la station et les réceptions depuis la station (données descendantes et remontantes). Puis lorsqu'une deuxième station 112 veut s'associer au point d'accès, Le contrôleur calcule de nouveau le temps d'accès alloué à chaque station 111, 112, en déduit le temps de silence pour les autres stations et met à jour la table (intervalles, élément de silence ...). Ainsi, le procédé selon l'invention est avantageusement dynamique et s'adapte aux requêtes d'établissement d'association sur le point d'accès 11.

Enfin, au cours d'une étape 63, le point d'accès émet une information de silence à destination d'un ou plusieurs noeuds associés dans le BSS. L'AP (où plutôt les VAP) construit les paquets des trames balises qui contiennent les informations d'interdiction d'émettre (en anglais « Quiet Element »). Cette information de silence comprend une information représentative d'une interdiction d'émettre des données ou paquets de données pendant un ou plusieurs intervalles temporels alloués à une ou plusieurs stations d'un deuxième ensemble BSS. Le point d'accès convertit les intervalles de temps en éléments de silence (ou en anglais « Quiet Element ») qu'il va insérer dans les trames balises (en galis « Beacon »). Un élément de silence permet d'interdire à un BSS d'émettre pendant un intervalle de temps. L'intervalle de temps de l'élément de silence est référencé par rapport à l'heure de transmission théorique (TBTT) de la balise suivante. En outre, les intervalles de temps de 2 BSS distincts sont référencés par rapport à l'heure de transmission théorique (TBTT) de la première balise 411. Ainsi, l'intervalle de silence 410 de la trame balise du BSS1 sera référencé par rapport à un TBTT de la balise 411. L'intervalle de silence 420 de la trame balise du BSS2 sera référencé par rapport à un TBTT de la balise 421. Il donc convient de corriger la référence de l'élément de silence 420 d'un offset de synchronisation 430. Selon une variante non représentée sur la figure 4, une trame comprenant une trame balise comprend plusieurs éléments de silence pour lesquels une même station est interdite d'accès au canal. A l'inverse, une trame pourra comprendre plusieurs intervalles 412, 422 de temps pendant lesquels la station pourra transmettre des données.

Selon un exemple de mise en oeuvre particulièrement avantageux, les noeuds forment un réseau Wi-Fi®, conformément à la norme IEEE 802.11-2007, en mode infrastructure. L'information de silence émise par le point d'accès virtuel VAP1 du premier ensemble BSS1 est reçue par la ou les stations 111 du premier ensemble BSS1 et comprend une information interdisant aux stations du premier ensemble d'émettre pendant un ou plusieurs intervalles temporels alloués au deuxième ensemble, et de manière générale pendant un ou plusieurs intervalles temporels alloués aux autres ensembles de noeuds du réseau différents du premier ensemble. Le deuxième ensemble de noeuds BSS2 comprend également un point d'accès virtuel VAP2, différent du point d'accès VAP1 du premier ensemble, émettant une information de silence à destination de la ou des stations 112 du deuxième ensemble, ces stations étant associées au point d'accès du deuxième ensemble pour l'établissement de toute communication avec le réseau. L'information de silence émise par le point d'accès du deuxième ensemble est reçue par les stations du deuxième ensemble et comprend une information interdisant aux stations du deuxième ensemble d'émettre pendant un ou plusieurs intervalles temporels alloués au premier ensemble, et de manière générale pendant un ou plusieurs intervalles temporels alloués aux autres ensembles de noeuds du réseau différents du deuxième ensemble. Selon une variante, le réseau comprend plus de deux ensembles de noeuds, chaque ensemble comprenant un point d'accès virtuel émettant une information représentative d'une interdiction d'émettre pendant un ou plusieurs intervalles temporels alloués aux autres ensembles du réseau, l'information étant émise par chaque point d'accès aux stations qui lui sont associées. De manière avantageuse, l'information de silence émise par un premier point d'accès virtuel du premier ensemble est comprise dans un élément de silence (de l'anglais « Quiet Element ») d'une trame de balise (de l'anglais « Beacon frame »), tel que défini dans la norme IEEE 802.11-2007. L'élément de silence comprend avantageusement la description d'un jeu de paramètres spécifiques permettant le positionnement d'un intervalle de silence par les noeuds ou stations du premier ensemble recevant l'information de silence. Le jeu de paramètres comprend les paramètres suivant : le compteur de silence (de l'anglais « Quiet Count »), la période de silence (de l'anglais « Quiet Period »), la durée de silence (de l'anglais « Quiet Duration ») et le décalage de silence (de l'anglais « Quiet Offset »). Selon une variante, la trame de balise comprend plusieurs éléments de silence, chaque élément de silence comprenant la description d'un jeu de paramètres spécifiques à un intervalle de silence. Cette variante permet de positionner plusieurs intervalles de silence, notamment lorsqu'une trame de communication est divisée en n sous-trames (n≥2) et qu'un intervalle de silence doit être positionné par sous-trame par un ensemble de stations donné.

Selon différentes variantes, les éléments des étapes précédemment décrites sont réalisés dans un ordre quelconque. Ainsi, l'association d'un second point d'accès virtuel à une station peut être réalisé avant le receuil des paramètres et/ou avant l'estimation des intervalles de temps. Ainsi la création d'un deuxième point d'accès virtuel peut être réalisé après avant l'estimation des intervalles de temps pour le premier point d'accès virtuel.

Bien entendu, l'invention ne se limite pas aux modes de réalisation décrits précédemment.

En particulier, l'invention n'est pas limitée à un réseau de type Wi-Fi® selon la norme IEEE 802.11-2007 mais s'étend à tout réseau filaire ou sans fil mettant en oeuvre une méthode d'accès au canal de type partiellement aléatoire.

De manière avantageuse, un point d'accès virtuel n'est pas associé à un unique noeud pour une association mais à plusieurs noeuds, isolant ainsi cet ensemble de noeuds d'un autre noeud.

De manière avantageuse, l'invention ne se limite pas aux modes de réalisation décrits précédemment comprenant deux ensembles BSS comprenant chacune une station et un point d'accès virtuel. L'invention est est compatible avec un nombre de BSS supérieur à deux, un nombre quelconque de stations regroupés dans ces BSS.

De manière avantageuse, chaque point d'accès émettant une information de silence s'interdit toute émission pendant le ou les intervalles temporels décrits dans l'information de silence.

De manière avantageuse, lorsqu'un client peut communiquer avec la modulation élevée prédéfinie, il obtient le débit attendu (qui est garanti) et lorsqu'il ne peut pas communiquer avec la modulation élevée prédéfinie, son débit disponible diminue (ou le nombre d'erreurs augmente). Lorsqu'un client ne peut pas communiquer avec la modulation élevée, un autre client ne voit pas son débit disponible affecté. Ainsi le débit disponible d'un client dépend de ses conditions de réception et ne dépend plus des conditions de réception d'autres clients du réseau. L'invention présente donc l'avantage d'isoler des liaisons sans-fil entre des clients.

Selon une variante, un point d'accès émet une information de silence à destination des stations qui lui sont associées et effectuent des mesures pendant le ou les intervalles temporels spécifiés dans l'information de silence, par exemple pour la détection d'un autre ensemble de noeuds ou BSS appartenant ou non au réseau formé par les BSS (dit ESS).

De manière avantageuse, tous les ensembles de noeuds (ou BSS) formant un réseau (ou ESS) utilisent la même méthode d'accès au canal et les mêmes protocoles de communication.

Selon une variante, il existe un plusieurs intervalles temporels pendant lequel (respectivement lesquels) tous les noeuds de tous les ensembles de noeuds ont interdiction d'émettre pour permettre à l'un des noeuds de faire une mesure, par exemple une mesure de détection d'interférent radar. Selon une autre variante, il existe un ou plusieurs intervalles temporels pendant lequel (respectivement lesquels) tous les noeuds de tous les ensembles sont autorisés à émettre, par exemple lorsqu'un flux sans qualité de service est émis, les intervalles réservés étant utilisés pour les flux avec qualité de service pour lesquels il faut limiter les risques de collisions et donc de perte de données.

## Revendications

1. Procédé d'établissement d'une première et d'une deuxième association entre un noeud principal (11) et respectivement un premier et un deuxième noeud sans-fil (111, 112), la première association associant un premier point d'accès virtuel, VAP1, du noeud principal (11) et le premier noeud (111), le premier point d'accès virtuel, VAP1, émettant à destination du premier noeud (111) des premières trames de balise (431) comprenant une première information, BSSID1, représentative de ladite première association, le premier point d'accès virtuel, VAP1, étant identifié par un identifiant d'ensemble de services, SSID;
dans lequel lorsque le noeud principal (11) reçoit du deuxième noeud (112) une requête pour l'établissement de la deuxième association, le procédé comprend, au niveau d'un contrôleur, des étapes de :
- initialisation de paramètres de la première et deuxième association ;
- création d'un deuxième point d'accès virtuel, VAP2, du noeud principal (11) émettant à destination du deuxième noeud (112) des deuxièmes trames de balise (432) comprenant une deuxième information, BSSID2, représentative de ladite deuxième association, ledit deuxième point d'accès virtuel, VAP2, étant identifié par l'identifiant d'ensemble de services, SSID;
- détermination à partir desdits paramètres d'un premier et d'un deuxième intervalle temporel (42, 43) pendant lequel respectivement le premier noeud (111) et le premier point d'accès virtuel, VAP1, d'une part, le deuxième noeud (112) et le deuxième point d'accès virtuel, VAP2, ont interdiction d'émettre;
- établissement de la deuxième association entre le deuxième noeud (112) et le deuxième point d'accès virtuel, VAP2,
- émission, à destination du premier et deuxième noeud (111, 112) d'au moins une information de silence représentative d'une interdiction d'émettre (410) pendant le premier ou le deuxième intervalle temporel (42, 43).

2. Procédé selon la revendication 1, dans lequel un premier et un deuxième débit, dr1, dr2, de transmission de données pratiqué par le premier et le deuxième noeud liés à la modulation physique employée respectivement par le premier et le deuxième noeud (111, 112) dans la première et la deuxième association, et un premier et un deuxième débit, DR1, DR2, de transmission de données requis par respectivement le premier et le deuxième noeud (111, 112) en fonction de la nature des données transmises dans la première et la deuxième association sont des paramètres.

3. Procédé selon la revendication 2, dans lequel le contrôleur fixe une durée de trame et le deuxième et le premier intervalle temporel (42, 43) ont une durée proportionnelle à la durée de ladite trame et proportionnelle au rapport du premier débit (dr1) de transmission de données pratiqué par le premier noeud (111) et du premier débit, DR1, de transmission de données requis par le premier noeud (111) et au rapport du deuxième débit (dr2) de transmission de données pratiqué par le deuxième noeud (112) et du deuxième débit, DR2, de transmission de données requis par le deuxième noeud (112).

4. Procédé selon la revendication 1, dans lequel un débit, dr, total de transmission de données pratiqué par le premier et le deuxième noeud liés à la modulation physique employée par respectivement le premier et le deuxième noeud (111, 112) dans la première et la deuxième association, et un premier et un deuxième débit, DR1, DR2, de transmission de données requis par respectivement le premier et le deuxième noeud (111, 112) en fonction de la nature des données transmises dans la première et la deuxième association sont des paramètres; le contrôleur fixe une durée de trame ; et le deuxième et le premier intervalle temporel (42, 43) ont une durée proportionnelle à la durée de ladite trame et proportionnelle au premier débit, DR1, de transmission de données requis par le premier noeud (111) rapporté au débit total de transmission de données pratiqué et au rapport du deuxième débit, DR2, de transmission de données requis par le deuxième noeud (112) rapporté au débit total de transmission de données pratiqué.

5. Procédé selon l'une des revendications 1 à 4, dans lequel ledit noeud principal (11) est un point d'accès, et ledit premier et deuxième noeud (111, 112) sont associés audit point d'accès.

6. Procédé selon l'une des revendications 1 à 4, dans lequel l'information de silence est comprise dans au moins un élément de silence (56) d'une trame de balise (431, 432).

7. Contrôleur pour établir une première et une deuxième association entre un noeud principal (11) et respectivement un premier et un deuxième noeud sans-fil (111, 112), la première association associant un premier point d'accès virtuel, VAP1, du noeud principal (11) et le premier noeud (111), le premier point d'accès virtuel, VAP1, émettant à destination du premier noeud (111) des premières trames de balise (431) comprenant une première information, BSSID1, représentative de ladite première association, le premier point d'accès virtuel, VAP1, étant identifié par un identifiant d'ensemble de services, SSID;
dans lequel ledit contrôleur comprend:
- des moyens d'initialisation de paramètres de la première et deuxième association
- des moyens de création d'un deuxième point d'accès virtuel, VAP2, du noeud principal (11) émettant à destination du deuxième noeud (112) des deuxièmes trames de balise (432) comprenant une deuxième information, BSSID2, représentative de ladite deuxième association, ledit deuxième point d'accès virtuel, VAP2, étant identifié par l'identifiant d'ensemble de services, SSID;
- des moyens de détermination à partir desdits paramètres d'un premier et d'un deuxième intervalle temporel (42, 43) pendant lequel respectivement le premier noeud (111) et le premier point d'accès virtuel, VAP1, d'une part, le deuxième noeud (112) et le deuxième point d'accès virtuel, VAP2, ont interdiction d'émettre;
- des moyens d'établissement de la deuxième association entre le deuxième noeud (112) et le deuxième point d'accès virtuel, VAP2,
- des moyens d'émission, à destination du premier et deuxième noeud (111, 112) d'au moins une information de silence représentative d'une interdiction d'émettre (410) pendant le premier ou le deuxième intervalle temporel (42, 43).

8. Programme d'ordinateur comprenant des instructions de code exécutables par un processeur pour implémenter la méthode selon l'une quelconque des revendications 1 à 6.

## Patentansprüche

1. Verfahren zur Herstellung einer ersten und einer zweiten Verbindung zwischen einem Hauptknoten (11) und jeweils einem ersten und einem zweiten drahtlosen Knoten (111, 112), wobei die erste Verbindung einen ersten virtuellen Zugangspunkt VAP1 des Hauptknotens (11) und den ersten Knoten (111) verbindet, wobei der erste virtuelle Zugangspunkt VAP1 an den ersten Knoten (111) erste Beacon-Frames (431) sendet, die eine erste Information BSSID1 enthalten, die für die besagte erste Verbindung repräsentativ ist, wobei der erste virtuelle Zugangspunkt VAP1 durch einen Service Set Identifier SSID identifiziert wird,
in welchem der Hauptknoten (11) vom zweiten Knoten (112) eine Anfrage zur Herstellung der zweiten Verbindung erhält, das Verfahren hinsichtlich einer Steuerung Schritte umfasst zur:
- Initialisierung von Parametern der ersten und zweiten Verbindung,
- Schaffung eines zweiten virtuellen Zugangspunktes VAP2 des Hauptknotens (11), der an den zweiten Knoten (112) zweite Beacon-Frames (432) sendet, die eine zweite Information BSSID2 enthalten, die repräsentativ für die besagte zweite Verbindung ist, wobei der besagte zweite virtuelle Zugangspunkt VAP2 durch einen Service Set Identifier SSID identifiziert wird,
- Bestimmung, ausgehend von den besagten Parametern, eines ersten und eines zweiten Zeitintervalls (42, 43), während dem jeweils der erste Knoten (111) und der erste virtuelle Zugangspunkt VAP1 auf der einen Seite, der zweite Knoten (112) und der zweite virtuelle Zugangspunkt VPA2 für das Senden gesperrt sind,
- Herstellung der zweiten Verbindung zwischen dem zweiten Knoten (112) und dem zweiten virtuellen Zugangspunkt VAP2,
- Sendung an den ersten und den zweiten Knoten (111, 112) von mindestens einer Ruheinformation, die eine Sendesperre (410) während des ersten oder des zweiten Zeitintervalls (42, 43) repräsentiert.

2. Verfahren nach Anspruch 1, in welchem eine erste und zweite Datenrate zur Datenübertragung dr1 und dr2, praktiziert von dem ersten und dem zweiten Knoten, die verbunden sind mit der physikalischen Modulation, aufgewendet jeweils durch den ersten und den zweiten Knoten (111, 112) in der ersten und der zweiten Verbindung, und eine jeweils von dem ersten und dem zweiten Knoten (111, 112) angeforderte erste und zweite Datenrate zur Datenübertragung DR1 und DR2 entsprechend der Art der in der ersten und der zweiten Verbindung übertragenen Daten Parameter sind.

3. Verfahren nach Anspruch 2, in welchem die Steuerung eine Framedauer festlegt und der zweite und der erste Zeitintervall (42, 43) eine Dauer anteilig zur Dauer des besagten Frames haben und anteilig in Bezug auf die durch den ersten Knoten (111) praktizierte erste Datenrate zur Datenübertragung (dr1) und die erste durch den ersten Knoten (111) angeforderte erste Datenrate DR1 und in Bezug auf die durch den zweiten Knoten (112) praktizierte zweite Datenrate zur Datenübertragung (dr2) und die zweite durch den zweiten Knoten (112) angeforderte Datenrate zur Datenübertragung DR2.

4. Verfahren nach Anspruch 1, in welchem eine Gesamtdatenrate zur Datenübertragung dr, praktiziert von dem ersten und dem zweiten Knoten, die verbunden sind mit der physikalischen Modulation, aufgewendet jeweils durch den ersten und den zweiten Knoten (111, 112) in der ersten und der zweiten Verbindung, und eine jeweils von dem ersten und dem zweiten Knoten (111, 112) angeforderte erste und zweite Datenrate zur Datenübertragung DR1 und DR2 entsprechend der Art der in der ersten und der zweiten Verbindung übertragenen Daten Parameter sind; die Steuerung eine Framedauer festlegt; und der zweite und der erste Zeitintervall (42, 43) eine Dauer haben anteilig zur Dauer des besagten Frames und anteilig zur ersten durch den ersten Knoten (111) angeforderte Datenrate zur Datenübertragung DR1 bezogen auf die praktizierte Gesamtdatenrate zur Datenübertragung und in Bezug auf die zweite durch den zweiten Knoten (112) angeforderte Datenrate zur Datenübertragung DR2 bezogen auf die praktizierte Gesamtdatenrate zur Datenübertragung.

5. Verfahren nach einem der Ansprüche 1 bis 4, in welchem der besagte Hauptknoten (11) ein Zugangspunkt ist, und der besagte erste und zweite Knoten (111, 112) mit dem besagten Zugangsknoten verbunden sind.

6. Verfahren nach einem der Ansprüche 1 bis 4, in welchem die Ruheinformation in mindestens einem Ruheelement (56) eines Beacon-Frames (431, 432) enthalten ist.

7. Steuerung zur Herstellung einer ersten und einer zweiten Verbindung zwischen einem Hauptknoten (11) und jeweils einem ersten und einem zweiten drahtlosen Knoten (111, 112), wobei die erste Verbindung einen ersten virtuellen Zugangspunkt VAP1 des Hauptknotens (11) und den ersten Knoten (111) verbindet, wobei der erste virtuelle Zugangspunkt VAP1 an den ersten Knoten (111) erste Beacon-Frames (431) sendet, die eine erste Information BSSID1 enthalten, die für die besagte erste Verbindung repräsentativ ist, wobei der erste virtuelle Zugangspunkt VAP1 durch einen Service Set Identifier SSID identifiziert wird,
in welchem die besagte Steuerung umfasst:
- Mittel zur Initialisierung von Parametern der ersten und zweiten Verbindung
- Mittel zur Schaffung eines zweiten virtuellen Zugangspunktes VAP2 des Hauptknotens (11), der an den zweiten Knoten (112) zweite Beacon-Frames (432) sendet, die eine zweite Information BSSID2 enthalten, die repräsentativ für die besagte zweite Verbindung ist, wobei der besagte zweite virtuelle Zugangspunkt VAP2 durch einen Service Set Identifier SSID identifiziert wird,
- Mittel zur Bestimmung, ausgehend von den besagten Parametern, eines ersten und eines zweiten Zeitintervalls (42, 43), während dem jeweils der erste Knoten (111) und der erste virtuelle Zugangspunkt VAP1 auf der einen Seite, der zweite Knoten (112) und der zweite virtuelle Zugangspunkt VPA2 für das Senden gesperrt sind,
- Mittel zur Herstellung der zweiten Verbindung zwischen dem zweiten Knoten (112) und dem zweiten virtuellen Zugangspunkt VAP2,
- Mittel zur Aussendung an den ersten und den zweiten Knoten (111, 112) von mindestens einer Ruheinformation, die eine Sendesperre (410) während des ersten oder des zweiten Zeitintervalls (42, 43) repräsentiert.

8. Computerprogramm, das Codeanweisungen umfasst, die durch einen Prozessor auszuführen sind, um die Methode nach einem der Ansprüche 1 bis 6 zu implementieren.

## Claims

1. Method for establishing a first and second association between a main node (11) and respectively a first and second wireless node (111, 112), the first association associating a first virtual access point, VAP1, of the main node (11) and the first node (111), the first virtual access point, VAP1, transmitting to the first node (111) first beacon frames (431) comprising a first item of information, BSSID1, representative of said first association BSS1, the first virtual access point, VAP1, being identified by a services set identifier, SSID,
wherein when the main node (11) receives from the second node (112) a request for the establishment of the second association, the method comprises, at the level of a controller, steps for:
- initialising parameters of the first and second association;
- creating a second virtual access point, VAP2, of the main node (11) transmitting to the second node (112) second beacon frames (432) comprising a second item of information, BSSID2, representative of said second association, said second virtual access point, VAP2, being identified by the services set identifier, SSID,
- determining, from said parameters, a first and a second temporal interval (42, 43) during which respectively the first node (111) and the first virtual access point, VAP1, on one hand, the second node (112) and the second virtual access point, VAP2, are prohibited from sending,
- establishing of the second association between the second node (112) and the second virtual access point, VAP2,
- transmitting, to the first and second node (111, 112) at least one item of quiet information representative of a prohibition to transmit (410) during the first or second temporal interval (42, 43).

2. Method according to claim 1, wherein a first and second data transmission bit rates , dr1 and dr2, practised by the first and second node linked to the physical modulation employed respectively by the first and second node (111, 112) in the first and second association, and a first and second data transmission bit rate, DR1 and DR2, required by respectively the first and second node (111, 112) according to the nature of data transmitted in the first and second association are parameters.

3. Method according to claim 2, wherein the controller sets a frame duration and the first and second temporal intervals (42, 43) have a duration proportional to the duration of said frame and proportional with respect to the first data transmission bit rate (dr1) practised by the first node (111) and the first data transmission bit rate, DR1, required by the first node (111) and with respect to the second data transmission bit rate (dr2) practised by the second node (112) and the second data transmission bit rate, DR2, required by the second node (112).

4. Method according to claim 1, wherein a total data transmission bit rate, dr, practiced by the first and second node linked to the physical modulation employed by respectively the first and second node (111, 112) in the first and second association, and a first and second data transmission bit rate, DR1, DR2, required by respectively the first and second node (111, 112) according to the nature of data transmitted in the first and second association are parameters, the controller sets a frame duration, and the second and the first temporal interval (42, 43) have a duration that is proportional to the duration of said frame and proportional to the first data transmission bit rate , DR1, required by the first node (111) relative to the total data transmission bit rate practiced and relative to the second data transmission bit rate, DR2, required by the second node (112) relative to the total data transmission bit rate practiced.

5. Method according to one of claims 1 to 4, wherein said main node (11) is an access point, and said first and second node (111, 112) are associated with said access point.

6. Method according to one of claims 1 to 4, wherein the quiet information is comprised in at least one quiet element (56) of a beacon frame (431, 432).

7. Controller for establishing a first and second association between a main node (11) and respectively a first and second wireless node (111, 112), the first association associating a first virtual access point, VAP1, of the main node (11) and the first node (111), the first virtual access point, VAP1, transmitting to the first node (111) first beacon frames (431) comprising a first item of information, BSSID1, representative of said first association, the first virtual access point (VAP1) being identified by a services set identifier, SSID, wherein the controller comprises :
- means for initialising parameters of the first and second association;
- means for creating a second virtual access point, VAP2, of the main node (11) transmitting to the second node (112) second beacon frames (432) comprising a second item of information, BSSID2, representative of said second association, said second virtual access point, VAP2, being identified by the services set identifier, SSID;
- means for determining, from said parameters, a first and a second temporal interval (42, 43) during which respectively the first node (111) and the first virtual access point, VAP1, on one hand, the second node (112) and the second virtual access point, VAP2, are prohibited from sending,
- means for establishing of the second association between the second node (112) and the second virtual access point (VAP2),
- means for transmitting, to the first and second node (111, 112) at least one item of quiet information representative of a prohibition to transmit (410) during the first or second temporal interval (42, 43).

8. Computer program comprising code instructions executable by a processor to implement the method according one of any claims 1 to 6.
